# EUROPÄISCHE PATENTSCHRIFT

(11) **EP 2 036 773 B1**
(45) Veröffentlichungstag und Bekanntmachung des Hinweises auf die Patenterteilung: **09.01.2013**
(21) Anmeldenummer: 08015805.8
(22) Anmeldetag: 09.09.2008
(51) Int. Cl.: B60R 5/04, B60R 21/06

(54) **Rollosystem**
Roller blind system
Système de store

(30) Priorität: 12.09.2007 DE 102007045049
(43) Veröffentlichungstag der Anmeldung: 18.03.2009
(73) Patentinhaber: BOS GmbH & Co. KG, 73760 Ostfildern (DE)
(72) Erfinder: Schleef, Thomas, 32457 Porta Westfalica (DE)
(74) Vertreter: Patentanwälte Ruff, Wilhelm, Beier, Dauster & Partner

(56) Entgegenhaltungen:
- DE-A1- 19 843 044
- DE-C1- 19 735 463
- DE-U1-202006 018 470
- JP-A- 4 334 635

## Beschreibung

### Anwendungsgebiet und Stand der Technik

Die Erfindung betrifft ein Rollosystem zur Verwendung in einem Fahrzeuginnenraum mit einer fahrzeugfesten Aufnahmevorrichtung und einer Rollovorrichtung, die in die fahrzeugfeste Aufnahmevorrichtung einsetzbar ist, wobei die Rollovorrichtung eine sich in einer Haupterstreckungsrichtung erstreckende und gegenüber der Aufnahmevorrichtung drehbare Rollowelle zur Aufnahme eines flexiblen Flächengebildes aufweist, welches in einer Auszugsrichtung von der Rollowelle abziehbar ist. Weiterhin weist die Rollovorrichtung Haltezapfen auf, die axial über die Enden der Rollowelle hinausragen und die im eingesetzten Zustand der Rollovorrichtung in Lagerausnehmungen der Aufnahmevorrichtung gelagert sind. Dabei sind die Haltezapfen jeweils an ihrem distalen Ende soweit aufgeweitet, dass die distalen Enden nicht in axialer Richtung durch die Lagerausnehmungen hindurchpassen.

Derartige Rollovorrichtungen sind allgemein bekannt. Sie dienen in Form horizontaler Rollovorrichtungen beispielsweise als Abdeckungen für Heckstauräume, insbesondere bei Kombifahrzeugen. Weiterhin dienen sie in vertikaler Ausrichtung auch als Trennnetze, um den Fahrgastbereich eines Fahrzeugs von einem Heckstaubereich zu trennen. Weitere Anwendungsmöglichkeiten gibt es beispielsweise im Bereich der Fahrzeugbeschattung.

Gattungsgemäße Rollosysteme weisen eine fallweise lösbare Rollovorrichtung aufweist, die über eine lösbare Verbindung im Fahrzeug festlegbar ist. Diese Rollovorrichtungen können in Unfallsituationen in gefährlicher Art und Weise durch das Fahrzeug geschleudert werden. Dies ist insbesondere bei Rollovorrichtungen eine große Gefahr, die ein stabiles und damit schweres Kassettengehäuse aufweisen.

Aus der DE 19735463 C1 ist ein Rollosystem bekannt, bei dem Verformungshülsen vorgesehen sind, die innerhalb einer in der Wickelwelle angeordneten Stange vorgesehen sind. Diese Stange ist im Betrieb ortsfest und dient als Anlenkpunkt für eine Torsionsfeder, die anderenends mit der Wickelfeder verbunden ist.

### Aufgabe und Lösung

Aufgabe der Erfindung ist es, ein gattungsgemäßes Rollosystem dahingehend weiterzubilden, dass dessen Rollovorrichtung im Crashfalle gut gesichert ist und/oder aufgrund ihrer Bauweise nur eine geringe Gefahr für Fahrgäste darstellt.

Diese Aufgabe wird erfindungsgemäß dadurch gelöst, dass je Haltezapfen jeweils ein Verformungsbauteil vorgesehen ist, welches drehfest mit der Rollowelle verbunden ist und welches derart ausgebildet und/oder angeordnet ist, dass es bei einer auf die Haltezapfen wirkenden und nach außen gerichteten Zugkraft unter Aufnahme von Energie plastisch verformt wird.

Ein derartiges erfindungsgemäßes Rollosystem weist durch die durch die Merkmale gekennzeichnete bauliche Gestaltung zum einen ein hohes Maß an Stabilität auf und ist durch die einfache Gestaltung mit einem vergleichsweise geringen Gewicht zu realisieren.

Die Haltezapfen der Rollovorrichtung, also des lösbar eingesetzten Bestandteiles des erfindungsgemäßen Rollosystems, können aus den fahrzeugfesten Lagerausnehmungen im Crashfalle nicht herausgezogen werden. Stattdessen bleiben sie aufgrund der aufgeweiteten Formgebung in den Lagerausnehmungen hängen. Insbesondere sicher ist es, wenn die Lagerausnehmungen unmittelbar im Chassis des Fahrzeugs vorgesehen sind, so dass keine Gefahr besteht, dass die Haltezapfen gemeinsam mit einem sie tragenden Bauelement aus dessen Verankerung gerissen werden. Die erfindungsgemäße Gestaltung führt also dazu, dass die durch die Trägheit der Rollowelle auf die Haltezapfen wirkende Kraft nicht die Rollovorrichtung in ihrer Gesamtheit aus der Verankerung reißen kann.

Durch die Ausgestaltung mit den Verformungsbauteilen wird weiterhin auch verhindert, dass sich die Haltezapfen von der Rollowelle lösen. Die Haltezapfen, die bis in die Rollowelle hineinragen und dort derart geformt sind, dass sie nicht am Verformungsbauteil vorbei herausgezogen werden können, drücken sich im Crashfalle aufgrund der wirkenden Zugkräfte stattdessen in die Verformungsbauteile hinein und verhindern somit ein Herausreißen der Haltezapfen aus der Rollowelle oder vermindern zumindest in starken Maße die kinetische Energie, mit der eine herausgerissene Rollowelle durch das Fahrzeug geschleudert wird.

Die Besonderheit der erfindungsgemäßen Ausgestaltung liegt insbesondere darin, dass das Verformungsbauteil unmittelbar an der Rollowelle befestigt ist. Diese unmittelbare Befestigung hat mehrere Vorteile. So ist zum einen eine sehr kleine Bauweise der Rollowelle möglich, da keine zusätzliche separate Stabilisierungswelle vonnöten ist. Darüber hinaus ist die unmittelbare Verbindung des Verformungsbauteils mit der Rollowelle auch Garant dafür, dass eine Trennung des Verformungsbauteils von der Rollowelle im Crashfalle sehr unwahrscheinlich ist.

Vorzugsweise beschränkt sich die drehfeste Verbindung mit der Rollowelle nicht auf das Verformungsbauteil, sondern umfasst alle Bauteile, die innerhalb der Rollowelle vorgesehen sind. Bei einer solchen Ausgestaltung werden demnach auch die Haltezapfen selbst drehfest mit Rollowelle verbunden. Dies bietet den Vorteil, dass der Raum für eine Lagerung der Rollowelle gegenüber den Haltezapfen eingespart wird und außerdem die Grundlage dafür geschaffen wird, die Haltezapfen von einem in der Aufnahmevorrichtung angeordneten Rollomotor antreibbar zu machen. Des Weiteren kann durch eine Gestaltung, bei der sich die beidseitigen Haltezapfen gemeinsam drehen, eine vorteilhafte kinematische Kopplung mit anderen Funktionselementen des Fahrzeugs, insbesondere fahrzeugsfest vorgesehenen Funktionselementen einer Abdeckvorrichtung für den Heckstauraum geschaffen werden. So kann ein in der Rollovorrichtung oder an einer Seite fahrzeugfest vorgesehener Rollomotor beidseitig der Rollovorrichtung diese fahrzeugfesten Funktionselemente wie Abdeckklappen oder ähnliches momentenbeaufschlagen.

Bei einer Gestaltung, bei der alle in der Rollowelle angeordneten Bauteile sich gemeinsam mit der Rollowelle drehen, wird demnach darauf verzichtet, innerhalb der Rollowelle noch Bauteile wie Wickelfedern vorzusehen, die sich nicht gemeinsam mit der Rollowelle drehen. Auch dies erleichtert und vereinfacht die Konstruktion erheblich. Insbesondere wird der konstruktive Aufwand vermieden, der erforderlich ist, um eine innerhalb der Rollowelle vorgesehene Wickelfeder einerseits mit der Rollowelle und andererseits mit einem fahrzeugfesten oder zumindest mit dem Fahrzeug drehfest verbundenen Gegenstück zu verbinden.

Die Verbindung des Verformungsbauteils mit der Rollowelle erfolgt vorzugsweise durch eine Crimpverbindung, wobei das Verformungsbauteil vorzugsweise als in der Rollowelle liegende Hülse ausgebildet ist. Die Ausgestaltung als Hülse ist vorteilhaft, da hierdurch der sich in die Rollowelle erstreckende Haltezapfen komplett umgeben sein kann und durch eine schlichte Aufweitung des Haltezapfens an seinem innenseitigen Ende bereits ein hohes Maß an Sicherheit erreicht werden kann. Die Nutzung einer Crimpverbindung ist im Sinne der gewünschten Stabilität besonders sinnvoll und einfach herzustellen. Sie kann durch Einbringen einer umlaufenden Sicke in die Rollowelle hergestellt werden. Wenn das Verformungsbauteil aus Kunststoff oder einem anderen vergleichsweise weichen Material gefertigt ist, können im Bereich des Verformungsbauteils auch zusätzliche Zwischenelemente vorgesehen sein, die zusätzlich oder statt des eigentlichen Verformungsbauteils mit der Rollowelle vercrimpt werden und die dadurch mittelbar eine Festlegung des Verformungsbauteils bewirken.

Bei einer Weiterbildung der Erfindung weist die Rollovorrichtung einen Wickelmotor auf, der außerhalb der Rollowelle angeordnet ist. Dies stellt die zweckmäßige Maßnahme dar, um innerhalb der Rollowelle jegliche drehmomentaufbauende Anordnungen zu vermeiden. Wenn der Wickelmotor Teil der Rollovorrichtung sein soll, muss gewährleistet werden, dass er sich nicht mit der Rollowelle gemeinsam dreht. Zu diesem Zweck sind verschiedene Formen der Festlegung denkbar, die zum Teil nachfolgend noch erläutert werden. Der Wickelmotor ist vorzugsweise so ausgebildet, dass er abtriebsseitig eine beidseitig offene und zugängliche Abtriebshülse aufweist, so dass die Rollowelle oder die mit ihr drehfest verbundenen Teile durch den Wickelmotor hindurchgeschoben werden können und dann drehfest mit dem Abtriebshülse verbunden werden können. Als Wickelmotoren kommt eine Vielzahl verschiedener Motoren in Frage. Eine besonders flexible Anwendung kann durch Elektromotoren gewährleistet werden. Bevorzugt ist es jedoch, wenn als Wickelmotor ein Federmotor eingesetzt wird, vorzugsweise ein vorgespannter Federmotor. Ein solcher Federmotor stellt eine sehr einfache Gestaltung dar und ist hervorragend geeignet, um die beim Ausziehen des Flächengebildes eingebrachte Energie zu speichern. Durch die Ausgestaltung des Federmotors mit einer Vorspannung wird erreicht, dass beim Ausziehen des Flächengebildes von Anfang an eine ausreichende Gegenkraft greift, so dass auch das Wiedereinziehen des Flächengebildes auf die Rollowelle zuverlässig erfolgt. Eine denkbare Gestaltung für eine derartige Vorspannung kann durch eine Spiralnut erreicht werden, in die ein radial beweglicher und sich axial erstreckender sowie mit der Rollowelle drehfest verbundener Stift eingreift.

Bei einer Gestaltung als Weiterbildung der oben beschriebenen Rollosysteme, weist die fahrzeugfeste Aufnahmevorrichtung einen Wickelmotor auf, wobei eine Abtriebswelle des Wickelmotors mit einem der Haltezapfen drehfest verbindbar ist, so dass die Abtriebswelle und der Haltezapfen um eine gemeinsame Drehachse drehbar sind, und wobei dieser Haltezapfen dabei ebenfalls drehfest mit der Rollowelle verbunden ist. Bei dieser Gestaltung, bei der der Wickelmotor nicht Teil der Rollovorrichtung, sondern Teil der Aufnahmevorrichtung ist, kann Gewicht an der Rollovorrichtung gespart werden, da der Motor einen erheblichen Anteil des Gewichts der Rollovorrichtung einnimmt. Die Rollovorrichtung kann dementsprechend sehr leichtgewichtig und auch konstruktiv einfach gehalten werden. Der Wickelmotor ist dabei derart gestaltet, dass er mit wenigen Handgriffen oder vorzugsweise schon bereits durch das Einlegen der Rollovorrichtung in die Aufnahmevorrichtung mit dem Haltezapfen verbindbar ist. Eine solche Ausgestaltung mit externem Wickelmotor kann sowohl vorsehen, dass nur auf einer Seite der Rollowelle ein Motor vorgesehen ist, oder dass beidseitig synchron zueinander laufende Motoren vorgesehen sind. Als Abtriebswelle des Wickelmotors wird in diesem Zusammenhang sowohl eine unmittelbar vom Motor angetriebene Welle als auch eine mittels eines Getriebes der Aufnahmevorrichtung mit dem Motor verbundene Welle angesehen. Durch die Verbindung der Abtriebswelle mit dem Haltezapfen wird erreicht, dass die Abtriebswelle und der Haltezapfen sich koaxial drehen.

Auch bei einer solchen Gestaltung ist es von Vorteil, wenn die Haltezapfen jeweils an ihrem distalen Ende so weit aufgeweitet sind, dass die distalen Enden nicht in axialer Richtung durch die Lagerausnehmungen hindurch passen. Weiterhin ist es von Vorteil, wenn die Haltezapfen an ihrem distalen Ende zumindest abschnittsweise korrespondierend mit der Abtriebswelle des Wickelmotors unrund ausgebildet sind. Diese unrunde Gestaltung der Haltezapfen ist dann vorzugsweise auch an der Abtriebswelle des Wickelmotors korrespondierend zum Haltezapfen realisiert und erlaubt eine formschlüssige Verbindung der Abtriebsseite des Motors mit dem Haltezapfen, die zum Übertragen von Drehmomenten vom Wickelmotor auf die Rollowelle oder von der Rollowelle auf den Wickelmotor gut geeignet ist. Die zueinander korrespondierenden Gestaltungen müssen nicht zwingend so ausgebildet sein, dass das distale Ende des Haltezapfens zur Einfügung in axialer Richtung in den korrespondierenden Abschnitt der Abtriebsseite ausgebildet ist. Ebenso denkbar sind Gestaltungen, bei denen der Wickelmotor im Bereich seiner Abtriebswelle eine radiale Ausnehmung aufweist, in die ein entsprechend geformter Haltezapfen eingefügt wird.

Bezüglich der Art des Wickelmotors bei dieser Ausgestaltung mit externem Wickelmotor gilt das oben schon geschriebene. Besonders bevorzugt sind wiederum Federmotoren, insbesondere vorgespannte Federmotoren. Allerdings gestattet die fahrzeugfeste Anordnung des Wickelmotors auch in besonders einfacher Weise die Verwendung von Elektromotoren.

Im einfachsten Fall kann ein erfindungsgemäßes Rollosystem vollständig ohne Kassettengehäuse oder andere an der Rollovorrichtung vorgesehenen Teile, die sich nicht mit der Rollowelle gemeinsam drehen, vorgesehen sein, da die Lagerung der Rollowelle durch fahrzeugfeste Lager erfolgt. Bevorzugt ist es jedoch, wenn die Rollovorrichtung eine gegenüber der Rollowelle relativ drehbewegliche Umgebungsstruktur aufweist, die mittels eines Momentenstützmittels mit der Aufnahmevorrichtung verbunden ist. Als Umgebungsstruktur werden dabei jegliche Elemente der Rollovorrichtung angesehen, die nicht drehfest mit der Rollowelle verbunden sind. Durch die Momentenstützmittel wird erreicht, dass ein auf die Rollowelle wirkendes Drehmoment im Zuge des Abrollens des Flächengebildes nicht auch ein Verschwenken dieser Umgebungsstruktur bewirkt.

Besonders bevorzugt ist es, wenn die Umgebungsstruktur ein Gehäuse umfasst, welches die Rollowelle zumindest zum überwiegenden Teil umgibt. Ein solches Gehäuse kann leicht ausgebildet sein, da es bei der erfindungsgemäßen Ausgestaltung kein stabilitätsgebendes Bauteil darstellen muss. Insbesondere kann es mit geringen Wandungsstärken und leichten Materialien, wie beispielsweise Kunststoff, ausgebildet sein. Die Gefahr, die im Unfallfall von der Rollovorrichtung ausgeht, wird beim Vorsehen eines solchen Gehäuses allenfalls geringfügig gesteigert.

Bei einer Weiterbildung der Erfindung weist die Umgebungsstruktur im Bereich der Haltezapfen Lagerhülsen auf, durch die hindurch die Haltezapfen nach außen ragen. Diese Lagerhülsen bilden mit den Haltezapfen vorzugsweise eine Spielpassung. Da eine solche Fixierung der Umgebungsstruktur an den Haltezapfen bereits die Bewegungsfreiheit der Umgebungsstruktur auf ein reines Verschwenken um die durch die Haltezapfen definierte Achse reduziert, kann durch ein sehr einfach gebildetes Momentenstützmittel, beispielsweise einen einfachen Stützstift, eine vollständige Festlegung der Umgebungsstruktur, also insbesondere eines Gehäuses, erzielt werden.

Bei einer Weiterbildung der Erfindung sind die Haltezapfen gegenüber der Rollowelle axial verschiebbar und durch eine nach außen wirkende Federkraft federkraftbeaufschlagt, wobei die Haltezapfen bezüglich ihrer maximalen Beabstandung vorzugsweise derart auf die Aufnahmevorrichtung angepasst sind, dass ein distales Ende der Haltezapfen im eingesetzten Zustand der Rollovorrichtung jeweils an einem Abschnitt der Aufnahmevorrichtung anliegt. Bei dieser Weiterbildung werden die Haltezapfen also durch die Federkraft permanent nach außen gedrückt, wobei sie innerhalb der Aufnahmevorrichtung jeweils an einem die Ausdehnung in Haupterstreckungsrichtung begrenzenden Abschnitt anliegen, so dass die Rollovorrichtung in axialer Richtung spielfrei gehalten ist. Die nach außen wirkende Federkraft ist darüber hinaus insbesondere dann zweckmäßig, wenn in der Aufnahmevorrichtung auch der Rollomotor vorgesehen ist, der über eine vorzugsweise formschlüssige Verbindung mit einem der Haltezapfen verbunden ist. Eine solche formschlüssige Verbindung, die vorzugsweise dadurch gebildet wird, dass die Abtriebsseite des Wickelmotors und der Haltezapfen zueinander korrespondierende Formgebungen aufweisen, kann besonders sicher aufrechterhalten werden, wenn durch die Federkraft der verbindende Haltezapfen permanent gegen die Abtriebswelle des Motors gedrückt wird.

Bei einer zu der vorgenannten Weiterbildung alternativen Weiterbildung sind die Haltezapfen gegenüber der Rollowelle axial verschiebbar und durch eine nach innen wirkende Federkraft federkraftbeaufschlagt, wobei die am distalen Ende aufgeweiteten Haltezapfen bezüglich ihrer minimalen Beabstandung vorzugsweise derart auf die Aufnahmevorrichtung angepasst sind, dass die Aufweitungen am eingesetzten Zustand der Rollovorrichtung jeweils an einem Abschnitt der Aufnahmevorrichtung anliegen. Hierdurch wird hinsichtlich der Spielfreiheit der Rollovorrichtung in axialer Richtung eine ähnliche Wirkung erzielt, wie bei einer Federkraftbeaufschlagung nach außen. Die Federkraftbeaufschlagung nach innen führt dazu, dass die Haltezapfen mit ihrer Aufweitung am distalen Ende permanent aufeinander zu kraftbeaufschlagt werden, so dass sie an dafür vorgesehenen Abschnitten der Aufnahmevorrichtung anliegen, vorzugsweise an dem Fahrzeuginnenraum abgewandten Seiten von Blechen, welche Durchbrechungen aufweisen, durch die hindurch die Haltezapfen im eingesetzten Zustand der Rollovorrichtung geführt sind.

Dem Problem, dass bei einer Ausgestaltung, bei der der Rollomotor fahrzeugfest vorgesehen ist, ein ungewünschtes Abrollen des Flächengebildes von der Rollowelle im nicht eingesetzten Zustand zu befürchten ist, kann durch verschiedene Maßnahmen hinsichtlich Blockiermitteln begegnet werden. Hierzu sind vorzugsweise Blockiermittel vorgesehen, mittels derer die Rollowelle drehfest mit der Umgebungsstruktur verbindbar ist, wobei die Blockiermittel vorzugsweise in Abhängigkeit der Relativstellung der Haltezapfen zueinander in einen blockierten oder einen unblockierten Zustand übergehen. Die Rollowelle und die Umgebungsstruktur, die im eingesetzten Zustand relativ zueinander drehbeweglich sind, werden im nicht eingesetzten Zustand der Rollovorrichtung durch die beschriebenen Blockiermittel drehfest miteinander verbunden. Hierdurch kann insbesondere verhindert werden, dass das flexible Flächengebilde abgerollt wird, da dieses zumindest bei einer Gestaltung mit einem Gehäuse als Umgebungsstruktur vorzugsweise durch ein dafür vorgesehenen Schlitz im Gehäuse geführt ist, der jedoch bei einer drehfesten Koppelung der Rollowellen mit der Umgebungsstruktur stets lagefest zur Rollowelle gehandhabt wird. Damit die Blockiermittel nicht manuell betätigt werden müssen, ist es besonders von Vorteil, wenn sie automatisch in Abhängigkeit davon aktiviert und deaktiviert werden, ob die Rollovorrichtung sich in ihrem eingesetzten Zustand befindet. Dies kann insbesondere zweckmäßig anhand der Position der Haltezapfen beeinflusst werden. Bei einer Ausgestaltung der Rollovorrichtung, bei der die Haltezapfen permanent nach außen kraftbeaufschlagt werden, kann dies derart erreicht werden, dass die Auslenkung der Haltezapfen nach außen zu einem Eingreifen von mit den Haltezapfen verbundenen Blockierelementen in die Umgebungsstruktur führt. Bevorzugte Ausgestaltungen dieses Prinzips sehen vor, dass die Blockiermittel kraftschlüssig wirken und hierfür ein Bremskonus aufweisen oder formschlüssig wirken und hierfür als Verzahnung ausgebildet sind.

Bezüglich der Ausgestaltung der Aufnahmevorrichtung sieht eine bevorzugte Weiterbildung der Erfindung vor, dass die Aufnahmevorrichtung zumindest für einen der Haltezapfen eine Führungsnut aufweist, insbesondere eine Führungsnut, deren Nutquerschnitt sich zumindest abschnittsweise in Richtung eines Nutgrundes aufweitet. Eine solche Nut gestattet ein sicheres Einfügen der Rollovorrichtung in die Aufnahmevorrichtung, wobei bevorzugt ist, dass für beide Haltezapfen jeweils eine derartige Führungsnut vorgesehen ist. Als Führungsnut im Sinne dieser Weiterbildung wird auch eine Durchbrechung in einem Blech angesehen, die in Art eines Langlochs ausgebildet ist. Durch die Aufweitung im Nutgrund, die im Falle eines Blechs durch einen freien hinter dem Blech liegenden Raum gebildet sein kann, der breiter als das Langloch ist, ist es möglich, den aufgeweiteten Abschnitt eines Haltezapfens gesichert in oder hinter der Führungsnut anzuordnen, wobei bei einer solchen Ausgestaltung entsprechende Einführungsbereiche vorgesehen sein müssen, in denen der aufgeweitete Abschnitt des Haltezapfens in die Nut einführbar ist. Dadurch wird eine formschlüssige Koppelung des Haltezapfens und damit der mit ihm verbundenen Rollowelle mit der Aufnahmevorrichtung erreicht, die verhindert, dass die Rollowelle in Richtung der Haupterstreckungsrichtung aus der Nut herausgezogen werden kann.

Bevorzugt ist es, dass ein erster Nutabschnitt als Einführungsabschnitt ausgebildet ist und sich vorzugsweise in Richtung der Auszugsrichtung erstreckt und/oder ein zweiter Nutabschnitt als Sicherungsabschnitt ausgebildet ist, der an seinem Ende geschlossen ist und sich vorzugsweise orthogonal zur Auszugsrichtung erstreckt. Diese Gestaltung verhindert durch die Umlenkung wirksam, dass im Falle eines Unfalls die Rollowelle aus der Nut herausspringt, da es sehr unwahrscheinlich ist, dass die Rollovorrichtung zunächst in Erstreckungsrichtung des zweiten Nutabschnitts und anschließend in Erstreckungsrichtung des ersten Nutabschnitts beschleunigt wird. Durch die abgeschlossene Ausgestaltung des zweiten Nutabschnitts ist gewährleistet, dass die Rollovorrichtung nur in einer Richtung aus der Nut herausgezogen werden kann. Bei einem Rollosystem, welches für ein vertikales Ausziehen des Flächengebildes vorgesehen ist, insbesondere bei einem Trennnetz, erstreckt sich der Sicherungsabschnitt, in dem sich die Haltezapfen im Normalbetrieb befinden, vorzugsweise in Fahrzeuglängsrichtung und ist frontseitig abgeschlossen. Da ein Unfall üblicherweise damit einhergeht, dass die Rollowelle in Richtung der Fahrzeugfront beschleunigt wird, ist hierdurch in Verbindung mit dem abgeschlossenen Ende zusätzliche Sicherheit erreichbar.

Besonders bevorzugt ist es, wenn das Momentenstützmittel als Momentenstützzapfen ausgebildet ist, der sich vorzugsweise parallel zu einem der Haltezapfen erstreckt. Er erstreckt sich vorzugsweise im eingesetzten Zustand der Rollovorrichtung bis in die Führungsnut. Bei einer solchen Ausgestaltung hat die Führungsnut demnach zwei Funktionen: Zum einen dient sie als Führung und Rückhaltemittel für einen Haltezapfens und zum anderen bildet sie eine Führung und Halt für das Momentenstützmittel.

Besonders bevorzugt ist es dabei, wenn der erste Nutabschnitt bezüglich seiner Länge der Beabstandung zwischen dem Momentenstützzapfen und dem Haltezapfen entspricht. Diese Gestaltung ermöglicht es, in Richtung des ersten Nutabschnitts die Bewegungsfreiheit der Rollovorrichtung vollständig zu unterbinden, da je nach Richtung der Beschleunigung in Richtung des ersten Nutabschnitts entweder der Haltezapfen oder der Momentenstützzapfen in Anlage mit einem Nutenrand gerät.

### Kurzbeschreibung der Zeichnungen

Weitere Vorteile und Merkmale der Erfindung ergeben sich aus den Ansprüchen sowie aus einer bevorzugten Ausgestaltung der Erfindung, die anhand der Zeichnungen erläutert ist. Dabei zeigen:
- Fig. 1: eine Rollovorrichtung einer ersten Ausführungsform eines erfindungsgemäßen Rollosystems in einer Gesamtdarstellung,
- Fig. 2: eine geschnittene Detailansicht der linken Seite der Rollovorrichtung,
- Fig. 3: eine geschnittene Detailansicht der rechten Seite der Rollovorrichtung,
- Fig. 4: eine Ansicht der Seite der Rollovorrichtung,
- Fig. 5: eine Aufnahmevorrichtung für die in den Figuren 1 bis 4 dargestellte Rollovorrichtung in einer perspektivischen Ansicht,
- Fig. 6 und 6a: die Aufnahmevorrichtung der Figur 5 mit eingesetzter Rollovorrichtung der Figuren 1 bis 4 in einer perspektivischen Ansicht und eine schematische Darstellung der Aufnahmenut der Aufnahmevorrichtung,
- Fig. 7: die Aufnahmevorrichtung mit eingesetzter Rollovorrichtung in einer geschnittenen Darstellung und
- Fig. 8a und 8b: eine schematische Ansicht einer zweiten Ausführungsform einer erfindungsgemäßen Rollovorrichtung in einem nicht eingesetzten und einem in einer Aufnahmevorrichtung eingesetzten Zustand.

### Detaillierte Beschreibung der Ausführungsbeispiele

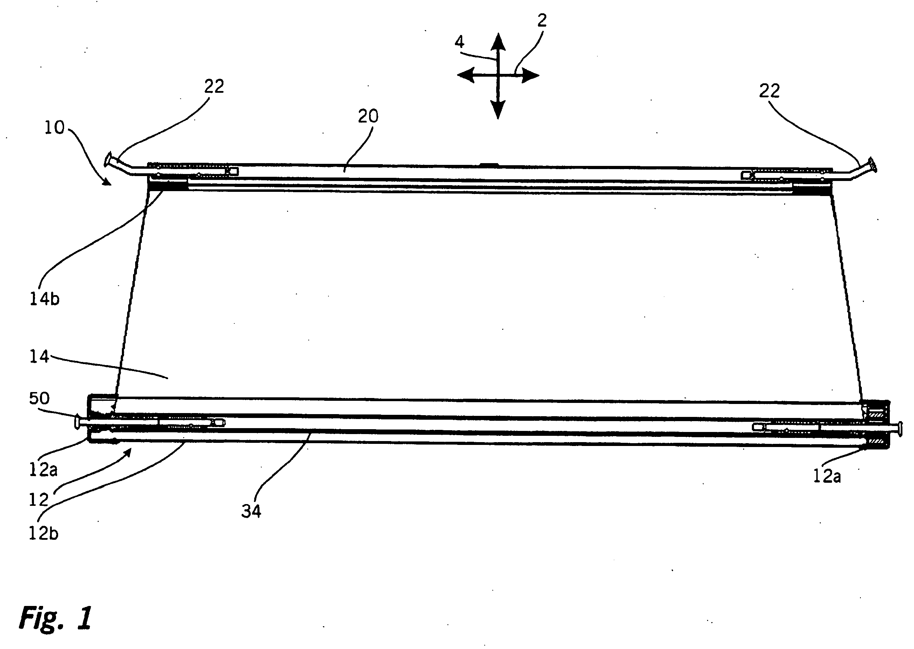

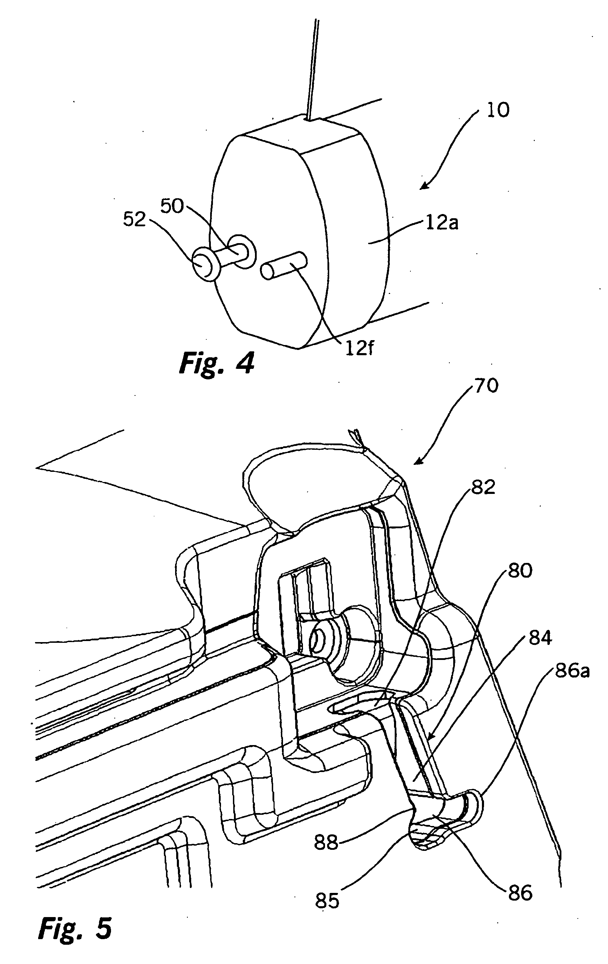

Die Figuren 1 bis 6 zeigen verschiedene Darstellungen einer ersten Ausführungsform eines erfindungsgemäßen Rollosystems. Dabei zeigen die Figuren 1 bis 4 eine Rollovorrichtung 10 des Rollosystems und Detailansichten davon, wobei diese Rollovorrichtung 10 lösbar in einer Aufnahmevorrichtung 70, die in den Figuren 5 bis 7 zu sehen ist, einsetzbar ist. Das dargestellte Rollosystem ist ein Rollosystem zum vertikalen Auszug und ist zur Verwendung als Trennnetz zwischen einem Fahrgastraum und einem heckseitig des Fahrgastraums angeordneten Heckstauraum vorgesehen.

Wie in den Figuren 1 bis 4 zu sehen ist, weist die Rollovorrichtung 10 ein Gehäuse 12 auf, welches aus endseitigen Gehäusekappen 12a und einem sich in einer Haupterstreckungsrichtung 2 erstreckenden Gehäuseprofil 12b besteht, wobei die Endkappen 12a und das Gehäuseprofil 12b mittels Verbindungsstiften 12e fest miteinander verbunden sind. An seiner Oberseite weist das Gehäuse 12 einen sich annähernd über die gesamte Länge erstreckenden Schlitz 12d auf, durch den hindurch ein flexibles Flächengebilde 14 geführt ist. Das flexible Flächengebilde 14 ist als Fangnetz ausgebildet und stellt die eigentliche Rollobahn der Rollovorrichtung dar. Diese Rollobahn 14 ist auf einer Rollowelle 34, die innerhalb des Gehäuses 12 drehbar gelagert ist, aufwickelbar und von dieser Rollowelle 34 in Fahrzeughochrichtung 4 nach oben abziehbar. Am distalen Ende der Rollobahn 14 weist dieses eine Schlaufenform auf, so dass sich ein in Haupterstreckungsrichtung erstreckender freier Querschnitt 14b ergibt, innerhalb dessen eine Einhängestange 20 angeordnet ist, die mittels zugeordneter Haltemittel 22 in einem Funktionszustand in fahrzeugfeste Halteaufnahme eingehängt werden kann.

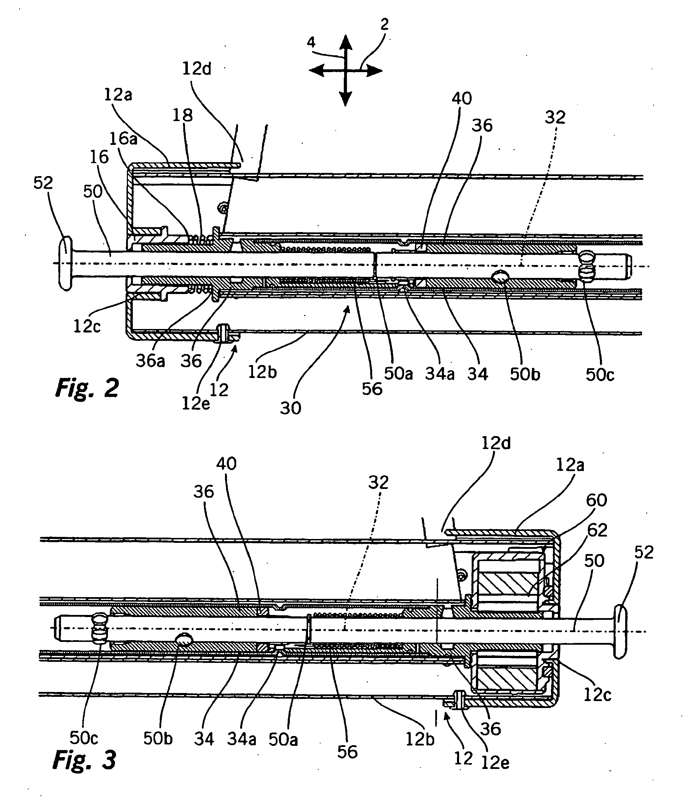

Die Endbereiche der Rollovorrichtung 10 auf der linken und auf der rechten Seite werden nachfolgend anhand der Figuren 2 und 3 erläutert. Soweit nicht anders gekennzeichnet, sind die nachfolgenden Merkmale jeweils auf beiden Seiten realisiert.

Die Gehäusekappen 12a des Gehäuses 12 weisen an ihrer Außenseite jeweils eine Öffnung 12c auf, wobei linksseitig in die Öffnung 12c eine Lagerhülsen 16 eingeschoben ist. Mittels dieser Lagerhülse 16 ist eine Rollowellenanordnung 30 linksseitig innerhalb des Gehäuses um die Drehachse 32 drehbar gelagert.

Diese Rollowellenanordnung 30 weist die schon genannte Rollowelle 34 als Hauptkomponente auf. In die Rollowelle 34 sind beidseitig Führungshülsen 36 aus Kunststoff eingeschoben. Diese sind über jeweils eine Crimpverbindung fest mit der Rollowelle 34 verbunden. Diese Crimpverbindungen werden durch Einbringen von Sicken 34a in die Rollowelle 34 hergestellt. Diese Sicken 34 verhindern im Zusammenspiel mit je einem Haltering 40, dass die einstückigen Führungshülsen 36 axial aus der Rollowelle herausgezogen werden können.

Innerhalb der Führungshülse ist jeweils ein Haltezapfen 50 angeordnet. Diese Haltezapfen 50 ragen seitlich nach außen aus dem Gehäuse 12 hinaus und endet in einer pilzförmigen Aufweitung 52. Innerhalb der jeweiligen Führungshülse 36 ist der Haltezapfen 50 axial verschiebbar, aber mit der Führungshülse 36 drehfest verbunden geführt. Zur Herstellung der axialen Verschiebbarkeit weist er eine eingeprägte Lasche 50b auf, die in einer nicht dargestellten in Längsrichtung erstreckten Nut der Führungshülse 36 geführt ist. Mittels je einer Druckfeder 56 in einer Aussparung der Führungshülsen 36, die sich einerseits an der Führungshülse 36 und andererseits mittels einer Federnut 50a am Haltezapfen 50 abstützt, werden die Haltezapfen 50 permanent nach innen kraftbeaufschlagt, im Falle der linken Seite, die in Figur 2 dargestellt ist, also nach rechts. An der der pilzförmigen Aufweitung 52 gegenüberliegenden Seite des Haltezapfens 50 innerhalb der Rollowelle 34 ragt der Haltezapfen aus der Führungshülse 36 heraus und ist in einem Bereich jenseits der Führungshülse 36 mit vier angeformte Laschen 50c versehen, die den Querschnitt des Haltezapfen 50 in diesem Bereich deutlich vergrößern.

Durch diese Gestaltung kann der Haltezapfen 50 nicht aus der Führungshülse 36 hinausrutschen. Wenn starke Zugkräfte den Haltezapfen 50 nach außen ziehen, wie es beispielsweise im Falle eines Unfalls geschehen kann, werden die Laschen 50c in die aus Kunststoff gefertigte Führungshülse 36 hineingezogen und verformen diese plastisch, wobei die kinetische Energie, die auf die Rollovorrichtung 10 wirkt, zu einem erheblichen Teil in Wärmeenergie umgewandelt wird.

Die Rollowellenanordnung 30 weist in axialer Richtung ein gewisses Spiel auf, wird jedoch durch eine Zentrierfeder 18 auf der linken Seite permanent in Richtung einer Anlageposition auf der rechten Seite gedrückt.

Die unmittelbare Verbindung der Rollowelle 30 mit der Führungshülse 36, die in der oben beschriebenen Art und Weise zur Aufnahme hoher kinetischer Energie geeignet ist, ermöglicht einen sehr kompakten Aufbau der Rollovorrichtung 10. Da innerhalb der Rollowelle auf jegliche Mittel verzichtet wird, die zur Herstellung einer Rückholkraft dienen, wie beispielsweise eine Wickelfeder, kann die Rollowelle einen sehr geringen Durchmesser haben, was wiederum die geringe Baugröße der gesamten Rollovorrichtung 10 zur Folge hat.

Auf der rechten Seite ist die Rollovorrichtung in weitgehend gleicher Weise wie auf der linken Seite ausgebildet, wobei ein Unterschied darin besteht, dass ein nicht im Detail dargestellter Wickelmotor 60 vorgesehen ist, der statt der Lagerhülse 16 in der rechtsseitigen Gehäusekappe 12a angeordnet ist. Dieser Wickelmotor weist eine nicht näher dargestellte Wickelfeder auf, mittels derer nach vorherigem Spannen eine Abtriebshülse 62 momentenbeaufschlagbar ist. Der rechtsseitige Haltezapfen 50 ist mitsamt der Führungshülse 36 durch diese Abtriebshülse 62 des Motors 60 hindurchgeschoben und mit dieser drehfest verbunden. Der Wickelmotor 60 ist weiterhin drehfest mit der Gehäusekappe 12a verbunden.

Diese Gestaltung mit einem sich axial innerhalb der Rollovorrichtung an die Rollowelle anschließenden Wickelmotor ermöglicht es, eine sehr kleine Baugröße zu erreichen. Der Wickelmotor selbst hat geringe Außenmaße und passt - wie dargestellt - problemlos in die Gehäusekappe 12a hinein.

Figur 4 zeigt eine Darstellung der Rollovorrichtung von der Seite. Es ist dabei erkennen, dass sich neben dem Haltezapfen 50 auch noch ein Momentenstützzapfen 12f von der Endkappe 12a nach außen erstreckt. Dieser Momentenstützzapfen 12f ist fest mit der Endkappe 12a verbunden.

Figur 5 zeigt einen zu einer Aufnahmevorrichtung gehörenden Konsolenbereich 70 des Fahrzeugs, also einen fahrzeugfesten Bereich seitlich eines Heckladeraums. In diesem Konsolenbereich 70 ist eine Aufnahmenut 80 zur Aufnahme des linksseitigen Haltezapfen 50 sowie des Mementenstützzapfens 12f vorgesehen. Diese Aufnahmenut 80 ist als Aussparung in einer Innenverkleidung eines Fahrzeugheckraums vorgesehen. Während diese Aussparung 80 selbst vergleichsweise schmal ist, ist ein Bereich hinter der Innenverkleidung vergrößert, so dass dort der aufgeweitete Abschnitt 52 des Haltezapfens 50 Platz findet.

Die Führungsnut 80 weist einen von oben zugänglichen Einführungsbereich 82 auf, von dem aus sich die Nut in einem ersten Nutabschnitt 84 in etwa senkrecht nach unten erstreckt. Der Einführungsbereich ist so bemessen, dass der aufgeweitete Abschnitt 52 hindurchpasst. An den ersten Nutabschnitt 84 schließt sich ein zweiter in etwa in Fahrzeuglängsrichtung ausgerichteter Nutabschnitt 86 an.

Zum Einführen der Rollovorrichtung 10 in die Nut 80 wird der Pilzkopf 52 durch die gegenüber der Nutbreite vergrößerte Durchbrechung des Einführungsbereichs 82 hindurchgeführt und die Rollovorrichtung 10 in einem um die Fahrzeugquerachse um 90° nach vorne verkippten Zustand nach unten gedrückt. Sobald der Haltezapfen 50 etwa auf halber Höhe des ersten Nutabschnitts 84 angelangt ist, wird der gehäusefest vorgesehene Momentenstützzapfen 12f ebenfalls in die Nut eingeführt. Bei gleichzeitigem Verschwenken wird die Rollovorrichtung dann weiter in die Nut eingeschoben, bis der Haltezapfen 50 am Nutende 86a des zweiten Nutabschnitts 86 anliegt und der Momentenstützzapfen 12f im Übergangsbereich 85 zwischen dem ersten Nutabschnitt 84 und dem zweiten Nutabschnitt 86 liegt. Durch eine an der Außenseite des ersten Nutabschnitts vorgesehene leichte Erhebung 88, an der der Momentenstützzapfen beim Einführen mit leichter Kraft vorbeigedrückt wird, ist gewährleistet, dass die Rollovorrichtung 10 nicht aus der so erreichten Lage herausrutscht.

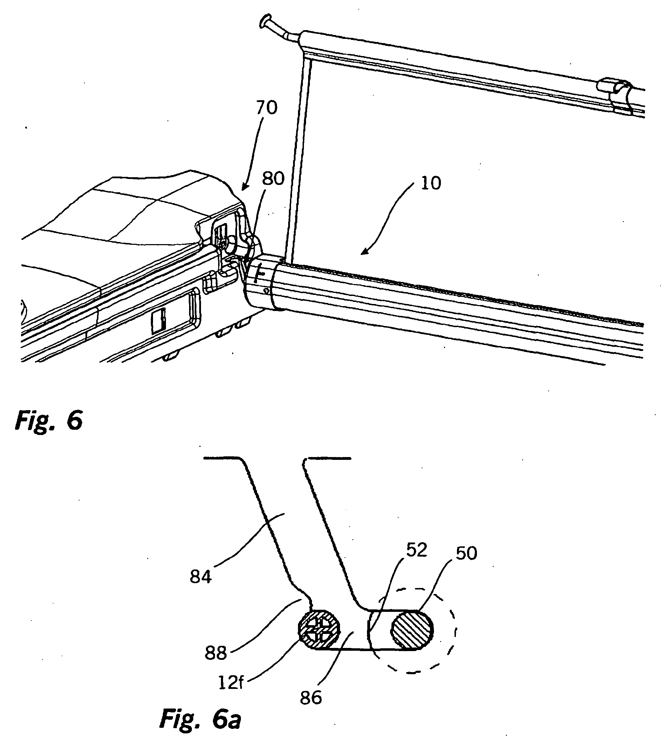

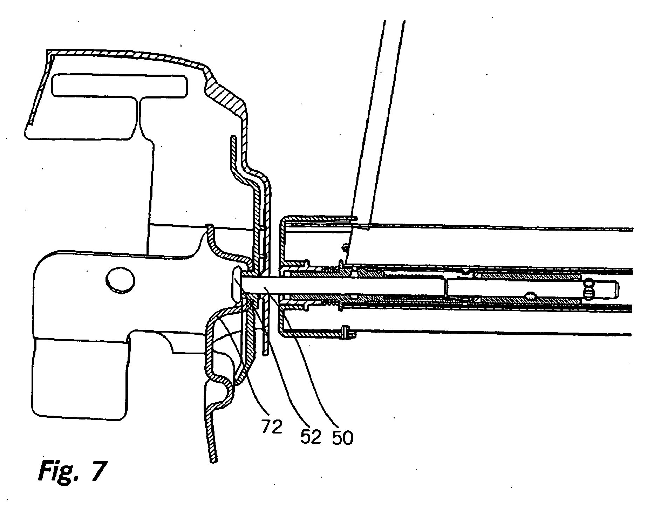

Der dadurch erreichte Zustand ist in den Fig. 6 bis 7 dargestellt. Die Lage des Haltzapfen 50 und des Momentenstützzapfens 12f kann insbesondere der schematischen Ansicht der Fig. 6a entnommen werden. Außerdem ist der so erreichte Zustand ist in geschnittener Darstellung nochmals in der Figur 7 dargestellte. Dabei ist zu ersehen, dass die pilzförmige Aufweitung 52 in seiner Endlage der Fig. 6 und 6a hinter einem Blechabschnitt 72 der Karosserie angeordnet ist, so dass selbst starke Zugkräfte kein Herausreißen des Haltezapfens 50 aus der Nut bewirken.

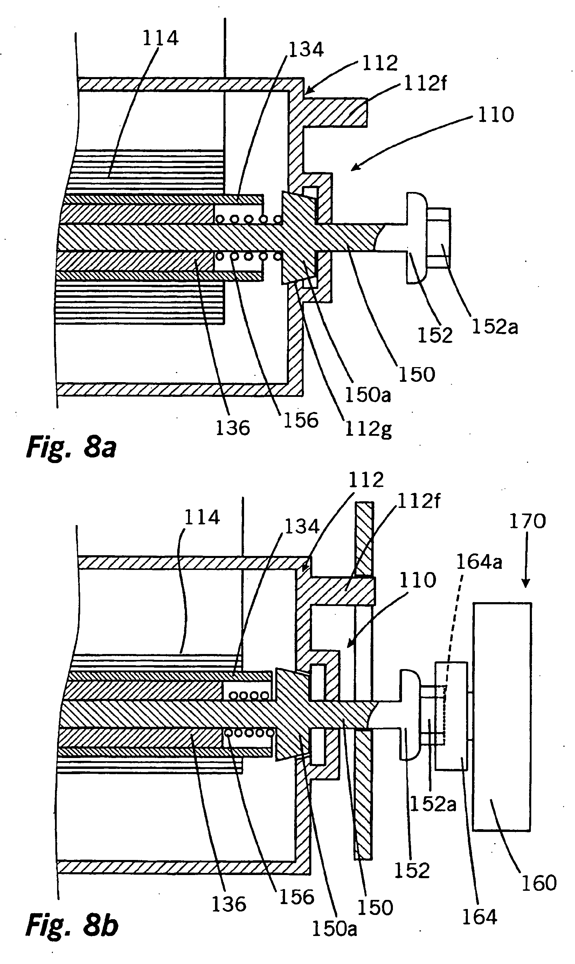

Die Figuren 8a und 8b zeigen in schematischer Art und Weise eine andere Ausführungsform eines erfindungsgemäßen Rollosystems. Dieses ist spiegelsymmetrisch aufgebaut. Dargestellt ist nur eine rechte Seite in einem in Zustand, in dem die Rollovorrichtung in eine Aufnahmevorrichtung eingesetzt ist, und in einem Zustand, in dem sie ausgebaut ist.

Diese zweite Ausführungsform der Fig. 8a, 8b entspricht hinsichtlich vieler Aspekte dem Prinzip nach der ersten Ausführungsform. Wiederum sind in einer Rollovorrichtung 110 eine Rollewelle 134 drehfest mit einem Verformungselement 136 und dieses wiederum drehfest mit einem verschiebbaren Haltezapfen 150 verbunden. Die Rollowelle, die ebenfalls der Aufnahme eines Flächengebildes 114 dient, ist innerhalb eines Gehäuses 112 gelagert, wobei sich der Haltezapfen 150 durch eine am Stirnende des Gehäuses 112 vorgesehene Öffnung nach außen erstrecken. Am seinem Ende 152 ist der Haltezapfen pilzartig aufgeweitet. Parallel zum Haltezapfen 150 ist am Gehäuse ein Momentenstützzapfen 112f angeformt.

In einigen Aspekten unterscheidet sich die Ausführungsform der Fig. 8a und 8b jedoch von der vorangegangen Ausführungsform.

So ist eine Druckfeder 156 derart angeordnet, dass der Haltezapfen 150 axial nach außen gedrückt wird, wobei er jedoch aufgrund einer nicht dargestellten Aufweitung jenseits des Verformungselements 136 innerhalb der Rollowelle 134 nicht aus der Rollowelle 134 entweichen kann.

Abweichend von der vorangehenden Ausführungsform ist der Wickelmotor 160 nicht in der Rollovorrichtung 110, sondern in einer fahrzeugfesten Aufnahmevorrichtung 170 vorgesehen. Wie in Fig. 8b dargestellt, erfolgt die Momentenübertragung auf die Rollowelle 134 im eingesetzten Zustand über eine formschlüssige Ausgestaltung des Pilzkopfs 152 mit einer Abtriebsseite 164 des Wickelmotors 160. Am Pilzkopf 152 ist zu diesem Zweck ein Sechskantfortsatz 152a angeformt, während in der Abtriebsseite 164 des Wicketmotors 160 korrespondierend eine ebenso geformte Ausnehmung 164a vorgesehen ist. Durch die Federkraftbeaufschlagung mittels der Druckfeder 156 wird im eingesetzten Zustand der Fig. 8b der Haltezapfen 150 die formschlüssige Verbindung sicher gehalten.

Im nicht eingesetzten Zustand, dargestellt in Fig. 8a, führt die Federkraft der Druckfeder 156 hingegen dazu, dass der Haltezapfen 150 weiter aus Rollovorrichtung 110 herausgedrückt wird. Dies wiederum verursacht, dass ein umlaufender konusförmiger Abschnitt 150a des Haltezapfens 150 gegen einen konusförmigen verengten Abschnitt 112g des Gehäuses 112 gedrückt wird. Der dadurch zustande kommende Reibschluss führt zu einer Drehsicherung, so dass die Rollowelle 134 sich in diesem Zustand in einer festen Drehstellung gegenüber dem Gehäuse 112 befindet. Ein ungewolltes Abwickeln des Flächengebildes 114 wird dadurch verhindert.

## Patentansprüche

1. Rollosystem zur Verwendung in einem Fahrzeuginnenraum mit
- einer fahrzeugfesten Aufnahmevorrichtung (70; 170) und
- einer Rollovorrichtung (10; 110), die in die fahrzeugfeste Aufnahmevorrichtung (70; 170) einsetzbar ist,
wobei
- die Rollovorrichtung (10; 110) eine sich in einer Haupterstreckungsrichtung (2) erstreckende und gegenüber der Aufnahmevorrichtung (70; 170) drehbare Rollowelle (34; 134) zur Aufnahme eines flexiblen Flächengebildes (14; 114) aufweist, welches in einer Auszugsrichtung (4) von der Rollowelle abziehbar ist,
- die Rollovorrichtung (10; 110) Haltezapfen (50; 150) aufweist, die axial über die Enden der Rollowelle (34; 134) hinausragen und die im eingesetzten Zustand der Rollovorrichtung (30; 130) in Lagerausnehmungen (86) der Aufnahmevorrichtung (70; 170) gelagert sind, und
- die Haltezapfen (50; 150) jeweils an ihrem distalen Ende (52; 152) soweit aufgeweitet sind, dass die distalen Enden (52; 152) nicht in axialer Richtung durch die Lagerausnehmungen (86) hindurchpassen,
**dadurch gekennzeichnet, dass**
je Haltezapfen (50; 150) jeweils ein Verformungsbauteil (36; 136) vorgesehen ist, welches drehfest mit der Rollowelle (34; 134) verbunden ist und welches derart ausgebildet und/oder angeordnet ist, dass es bei einer auf die Haltezapfen (50; 150) wirkenden und nach außen gerichteten Zugkraft unter Aufnahme von Energie plastisch verformt wird.

2. Rollosystem nach Anspruch 1,
**dadurch gekennzeichnet, dass**
das Verformungsbauteil (36; 136) mit der Rollowelle (34; 134) durch eine Crimp-Verbindung verbunden ist, wobei das Verformungsbauteil (36; 136) vorzugsweise als Hülse ausgebildet ist.

3. Rollosystem nach Anspruch 1 oder 2,
**dadurch gekennzeichnet, dass**
die Rollovorrichtung (10) einen Wickelmotor (60) aufweist, der außerhalb der Rollowelle (34) angeordnet ist.

4. Rollosystem nach Anspruch 1 oder 2,
**dadurch gekennzeichnet, dass**
- die fahrzeugsfeste Aufnahmevorrichtung (170) einen Wickelmotor (160) aufweist, wobei eine Abtriebswelle (164) des Wickelmotors (160) mit einem der Haltezapfen (150) drehfest verbindbar ist, so dass die Abtriebswelle (164) und der Haltezapfen (150) um eine gemeinsame Drehachse drehbar sind, und
- dieser Haltezapfen (150) drehfest mit der Rollowelle (134) verbunden ist.

5. Rollosystem nach Anspruch 4,
**dadurch gekennzeichnet, dass**
die Haltezapfen (150) jeweils an ihrem distalen Ende (152) soweit aufgeweitet sind, dass die distalen Enden (152) nicht in axialer Richtung durch die Lagerausnehmungen hindurchpassen, und/oder an ihrem distalen Ende (152) zumindest abschnittsweise korrespondierend mit einer Abtriebswelle (164) des Wickelmotors (160) unrund ausgebildet sind.

6. Rollosystem nach einem der Ansprüche 2 bis 5,
**dadurch gekennzeichnet, dass**
der Wickelmotor (60; 160) als Federmotor, vorzugsweise als vorgespannter Federmotor ausgebildet ist.

7. Rollosystem nach einem der vorstehenden Ansprüche,
**dadurch gekennzeichnet, dass**
die Rollovorrichtung (10; 110) eine gegenüber der Rollowelle (34; 134) relativ drehbewegliche Umgebungsstruktur (12; 112) aufweist, die mittels eines Momentenstützmittels (12f, 112f) mit der Aufnahmevorrichtung (70; 170) verbunden ist.

8. Rollosystem nach Anspruch 7,
**dadurch gekennzeichnet, dass**
die Umgebungsstruktur (12; 112) ein Gehäuse (12; 112) umfasst, welches die Rollowelle (34; 134) zumindest zum überwiegenden Teil umgibt.

9. Rollosystem nach Anspruch 8,
**dadurch gekennzeichnet, dass**
die Umgebungsstruktur (112) im Bereich der Haltezapfen (150) Lagerhülsen aufweist, durch die hindurch die Haltezapfen (150) nach außen ragen.

10. Rollosystem nach einem der vorstehenden Ansprüche,
**dadurch gekennzeichnet, dass**
die Haltezapfen (150) gegenüber der Rollowelle (134) axial verschiebbar und durch eine nach außen wirkende Federkraft federkraftbeaufschlagt sind, wobei die Haltezapfen (150) bezüglich ihrer maximalen Beabstandung vorzugsweise derart auf die Aufnahmevorrichtung (170) angepasst sind, dass ein distales Ende (152a) der Haltezapfen im eingesetzten Zustand der Rollovorrichtung (110) jeweils an einem Abschnitt (164a) der Aufnahmevorrichtung (170) anliegt.

11. Rollosystem nach einem der Ansprüche 1 bis 9,
**dadurch gekennzeichnet, dass**
die Haltezapfen (50) gegenüber der Rollowelle (34) axial verschiebbar und durch eine nach innen wirkende Federkraft federkraftbeaufschlagt sind, wobei die am distalen Ende (52) aufgeweiteten Haltezapfen (50) bezüglich ihrer maximalen Beabstandung vorzugsweise derart auf die Aufnahmevorrichtung (70) angepasst sind, dass die Aufweitungen (52) im eingesetzten Zustand der Rollovorrichtung (10) jeweils an einem Abschnitt /72) der Aufnahmevorrichtung (70) anliegen.

12. Rollosystem nach Anspruch 10 oder 11,
**dadurch gekennzeichnet, dass**
Blockiermittel (150a, 112g)) vorgesehen sind, mittels derer die Rollowelle (134) drehfest mit der Umgebungsstruktur (112) verbindbar ist, wobei die Blockiermittel (150a, 112g) vorzugsweise in Abhängigkeit der Relativstellung der Haltezapfen (150) zueinander in einen blockierten Zustand oder einen frei beweglichen Zustand übergehen.

13. Rollosystem nach Anspruch 12,
**dadurch gekennzeichnet, dass**
an den Haltezapfen (150) Blockierabschnitte (150a) vorgesehen sind, mittels derer durch Zustellung an korrespondierende Blockierabschnitte (112g) der Umgebungsstruktur (112) der blockierte Zustand herstellbar ist, wobei vorzugsweise die Blockierabschnitte (150a) an den Haltezapfen (150) und die Blockierabschnitte (112g) an der Umgebungsstruktur (112) als kraftschlüssig wirkende Blockiermittel (112g, 150a) mit einem Bremskonus (150a) oder als formschlüssig wirkende Blockiermittel mit einer Verzahnung ausgebildet sind.

14. Rollosystem nach einem der vorstehenden Ansprüche,
**dadurch gekennzeichnet, dass**
die Aufnahmevorrichtung (70; 170) zumindest für einen der Haltezapfen (50; 150) eine Führungsnut (80) aufweist, insbesondere eine Führungsnut (80), deren Nutquerschnitt sich zumindest abschnittsweise in Richtung eines Nutgrundes aufweitet.

15. Rollosystem nach Anspruch 14,
**dadurch gekennzeichnet, dass**
- ein erster Nutabschnitt (84) als Einführungsabschnitt ausgebildet ist und sich vorzugsweise in Richtung der Auszugsrichtung (4) erstreckt und/oder
- ein zweiter Nutabschnitt (86) als Sicherungsabschnitt ausgebildet ist, der an seinem Ende (86a) geschlossen ist und sich vorzugsweise orthogonal zur Auszugsrichtung erstreckt.

16. Rollosystem nach einem der vorstehenden Ansprüche,
**dadurch gekennzeichnet, dass**
das Momentenstützmittel (12f, 112f) als Momentenstützzapfen (12f; 112f) ausgebildet ist, der sich vorzugsweise parallel zu einem der Haltezapfen (50; 150) erstreckt und der sich besonders vorzugsweise im eingesetzten Zustand der Rollovorrichtung (10; 110) bis in die Führungsnut (80) erstreckt.

17. Rollosystem nach Anspruch 16,
**dadurch gekennzeichnet, dass**
der zweite Nutabschnitt (86) bezüglich seiner Länge der Beabstandung zwischen dem Momentenstützzapfens (12f, 112f) und dem Haltezapfen (50; 150) entspricht.

## Claims

1. Roller blind system for use in a vehicle interior, having
- a vehicle-fixed receiving device (70; 170) and
- a roller blind device (10; 110) insertable into said vehicle-fixed receiving device (70; 170),
where
- the roller blind device (10; 110) has a roller blind shaft (34; 134) extending in a main extension direction (2) and rotatable relative to the receiving device (70; 170) for receiving a flexible planar structure (14; 114) which can be pulled off the roller blind shaft in a pull-out direction (4),
- the roller blind device (10; 110) has retaining pins (50; 150) projecting axially beyond the ends of the roller blind shaft (34; 134) and mounted in bearing recesses (86) of the receiving device (70; 170) in the inserted state of the roller blind device (30; 130), and
- the retaining pins (50; 150) are each widened at their distal end far enough for said distal ends (52; 152) not to fit through the bearing recesses (86) in the axial direction,
**characterized in that**
for each retaining pin (50; 150) a deformable component (36; 136) is provided which is connected rotation-fixed to the roller blind shaft (34; 134) and designed and/or arranged such that it is plastically deformed while absorbing energy when an outwardly directed tensile force acts on the retaining pins (50; 150).

2. Roller blind system according to Claim 1,
**characterized in that**
the deformable component (36; 136) is connected to the roller blind shaft (34; 134) by a crimp connection, where the deformable component (36; 136) is preferably designed as a sleeve.

3. Roller blind system according to Claim 1 or 2,
**characterized in that**
the roller blind device (10) has a winding motor (60) arranged outside the roller blind shaft (34).

4. Roller blind system according to Claim 1 or 2,
**characterized in that**
- the vehicle-fixed receiving device (170) has a winding motor (160), where an output shaft (164) of the winding motor (160) can be connected rotation-fixed to one of the retaining pins (150) such that the output shaft (164) and the retaining pin (150) are rotatable about a common rotation axis, and
- said retaining pin (150) is connected rotation-fixed to the roller blind shaft (134).

5. Roller blind system according to Claim 4,
**characterized in that**
the retaining pins (150) are each widened at their distal end (152) far enough for the distal ends (152) not to fit through the bearing recesses in the axial direction, and/or are designed at least in some sections out-of-round at their distal ends (152) corresponding to an output shaft (164) of the winding motor (160).

6. Roller blind system according to one of Claims 2 to 5,
**characterized in that**
the winding motor (60; 160) is designed as a spring motor, preferably as a pretensioned spring motor.

7. Roller blind system according to one of the preceding claims,
**characterized in that**
the roller blind device (10; 110) has a surrounding structure (12; 112) rotatably movable relative to the roller blind shaft (34; 134) and connected by a torque support means (12f, 112f) to the receiving device (70; 170).

8. Roller blind system according to Claim 7,
**characterized in that**
the surrounding structure (12; 112) comprises a housing (12; 112) which at least predominantly surrounds the roller blind shaft (34; 134).

9. Roller blind system according to Claim 8,
**characterized in that**
the surrounding structure (112) has in the area of the retaining pins (150) bearing sleeves through which the retaining pins (150) project outwards.

10. Roller blind system according to one of the preceding claims,
**characterized in that**
the retaining pins (150) are axially movable relative to the roller blind shaft (134) and spring-loaded by an outward-acting spring force, where the retaining pins (150) are preferably adapted to the receiving device (170) in respect of their maximum distance such that a distal end (152a) of the retaining pins in the inserted state of the roller blind device (110) contacts in each case a section (164a) of the receiving device (170).

11. Roller blind system according to one of Claims 1 to 9,
**characterized in that**
the retaining pins (50) are axially movable relative to the roller blind shaft (34) and spring-loaded by an inward-acting spring force, where the retaining pins (50) widened at the distal end (52) are preferably adapted to the receiving device (70) in respect of their maximum distance such that the widened ends (52) in the inserted state of the roller blind device (10) contact in each case a section (72) of the receiving device (70).

12. Roller blind system according to Claim 10 or 11,
**characterized in that**
blocking means (150a, 112g) are provided by which the roller blind shaft (134) can be connected rotation-fixed to the surrounding structure (112), where the blocking means (150a, 112g) move into a blocked state or a freely movable state preferably depending on the relative positions of the retaining pins (150) to one another.

13. Roller blind system according to Claim 12,
**characterized in that**
blocking sections (150a) are provided on the retaining pins (150) by which the blocked state can be achieved by movement towards corresponding blocking sections (112g) of the surrounding structure (112), where the blocking sections (150a) on the retaining pins (150) and the blocking sections (112g) on the surrounding structure (112) are preferably designed as non-positively acting blocking means (112g, 150a) having a braking cone (150a) or as positively acting blocking means with a gearing.

14. Roller blind system according to one of the preceding claims,
**characterized in that**
the receiving device (70; 170) has for at least one of the retaining pins (50; 150) a guide groove (80), in particular a guide groove (80), whose groove cross-section widens at least in some sections in the direction of a groove bottom.

15. Roller blind system according to Claim 14,
**characterized in that**
- a first groove section (84) is designed as an insertion section and extends preferably in the direction of the pull-out direction (4) and/or
- a second groove section (86) is designed as a securing section closed at its end (86a) and extending preferably orthogonal to the pull-out direction.

16. Roller blind system according to one of the preceding claims,
**characterized in that**
the torque support means (12f, 112f) is designed as a torque support pin (12f, 112f) extending preferably parallel to one of the retaining pins (50; 150) and extending into the guide groove (80) in particular preferably in the inserted state of the roller blind device (10; 110).

17. Roller blind system according to Claim 16,
**characterized in that**
the second groove section (86) corresponds in respect of its length to the distance between the torque support pin (12f, 112f) and the retaining pin (50; 150).

## Revendications

1. Système de store destiné à être utilisé dans l'habitacle d'un véhicule, comprenant
- un dispositif de réception (70 ; 170) solidaire du véhicule et
- un dispositif à store (10 ; 110) qui peut être logé dans le dispositif de réception (70 ; 170) solidaire du véhicule,
sachant que
- le dispositif à store (10 ; 110) présente un arbre de store (34 ; 134) s'étendant dans une direction d'extension principale (2), pivotant par rapport au dispositif de réception (70 ; 170) et destiné à loger une structure plane souple (14 ; 114) qui peut être déroulée de l'arbre de store dans un sens de déroulement (4),
- le dispositif à store (10 ; 110) présente des chevilles de maintien (50; 150) qui dépassent axialement des extrémités de l'arbre de store (34 ; 134) et sont logées dans des évidements de logement (86) du dispositif de réception (70 ; 170) lorsque le dispositif à store (30 ; 130) est inséré, et que
- les chevilles de maintien (50 ; 150) sont respectivement évasées à leurs extrémités distales (52 ; 152) à tel point que les extrémités distales (52 ; 152) ne peuvent pas passer à travers les évidements de logement (86) dans le sens axial,
**caractérisé en ce que**
pour chaque cheville de maintien (50 ; 150) est prévu un composant déformable (36 ; 136) lié en rotation à l'arbre de store (34 ; 134) et conçu et/ou disposé de manière telle qu'il est déformé en absorbant de l'énergie en présence d'une force de traction orientée vers l'extérieur agissant sur les chevilles de maintien (50 ; 150).

2. Système de store selon la revendication 1,
**caractérisé en ce que**
le composant déformable (36 ; 136) est relié à l'arbre de store (34 ; 134) par un raccord serti, le composant déformable (36 ; 136) étant de préférence conçu en tant que manchon.

3. Système de store selon la revendication 1 ou 2,
**caractérisé en ce que**
le dispositif à store (10) présente un moteur enrouleur (60) qui est placé hors de l'arbre de store (34).

4. Système de store selon la revendication 1 ou 2,
**caractérisé en ce que**
- le dispositif de réception (170) solidaire du véhicule présente un moteur enrouleur (160), sachant qu'un arbre mené (164) du moteur enrouleur (160) peut être relié de manière solidaire en rotation à l'une des chevilles de maintien (150), de sorte que l'arbre mené (164) et la cheville de maintien (150) peuvent pivoter autour d'un axe de rotation commun, et que
- cette cheville de maintien (150) est liée en rotation à l'arbre de store (134).

5. Système de store selon la revendication 4,
**caractérisé en ce que**
les chevilles de maintien (150) sont respectivement évasées à leur extrémité distale (152) à tel point que les extrémités distales (152) ne peuvent pas passer à travers les évidements de logement dans le sens axial, et/ou sont ovalisées à leur extrémité distale (152) de manière à correspondre au moins partiellement à un arbre mené (164) du moteur enrouleur (160).

6. Système de store selon l'une des revendications 2 à 5,
**caractérisé en ce que**
le moteur enrouleur (60 ; 160) est conçu en tant que moteur à ressort, de préférence en tant que moteur à ressort précontraint.

7. Système de store selon l'une des revendications précédentes,
**caractérisé en ce que**
le dispositif à store (10 ; 110) présente une structure enveloppante (12 ; 112) mobile en rotation par rapport à l'arbre de store (34 ; 134) et reliée au dispositif de réception (70 ; 170) par un dispositif de support de couple (12f, 112f).

8. Système de store selon la revendication 7,
**caractérisé en ce que**
la structure enveloppante (12 ; 112) comprend un corps (12 ; 112) qui entoure l'arbre de store (34 ; 134) au moins sur sa plus grande partie.

9. Système de store selon la revendication 8,
**caractérisé en ce que**
dans la zone des chevilles de maintien (150), la structure enveloppante (112) présente des douilles de palier à travers lesquelles les chevilles de maintien (150) font saillie vers l'extérieur.

10. Système de store selon l'une des revendications précédentes,
**caractérisé en ce que**
les chevilles de maintien (150) sont mobiles axialement par rapport à l'arbre de store (134) et soumises à la force d'un ressort agissant vers l'extérieur, sachant qu'en ce qui concerne la distance maximale entre elles, les chevilles de maintien (150) sont de préférence adaptées au dispositif de réception (170) de manière telle qu'une extrémité distale (152a) de chaque cheville de maintien s'appuie sur une section (164a) du dispositif de réception (170) lorsque le dispositif à store (110) est inséré.

11. Système de store selon l'une des revendications 1 à 9,
**caractérisé en ce que**
les chevilles de maintien (50) sont mobiles axialement par rapport à l'arbre de store (34) et soumises à la force d'un ressort agissant vers l'intérieur, sachant qu'en ce qui concerne la distance maximale entre elles, les chevilles de maintien (50) évasées à l'extrémité distale (52) sont de préférence adaptées au dispositif de réception (70) de manière telle que les évasements (52) respectifs s'appuient sur une section (72) du dispositif de réception (70) lorsque le dispositif à store (10) est inséré.

12. Système de store selon la revendication 10 ou 11,
**caractérisé en ce que**
sont prévus des moyens de blocage (150a, 112g) par lesquels l'arbre de store (134) peut être lié en rotation à la structure enveloppante (112), sachant que les moyens de blocage (150a, 112g) commutent dans un état de blocage ou dans un état de libre mobilité de préférence en fonction de la position des chevilles de maintien (150) l'une par rapport à l'autre.

13. Système de store selon la revendication 12,
**caractérisé en ce que**
sur les chevilles de maintien (150) sont prévues des sections de blocage (150a) au moyen desquelles peut être établi l'état de blocage par approche sur des sections de blocage (112g) correspondantes de la structure enveloppante (112), sachant que de préférence les sections de blocage (150a) sur les chevilles de maintien (150) et les sections de blocage (112g) sur la structure enveloppante (112) sont conçues en tant que moyens de blocage (112g, 150a) agissant par force avec un cône-frein (150a) ou en tant que moyens de blocage agissant par complémentarité de forme avec une denture.

14. Système de store selon l'une des revendications précédentes,
**caractérisé en ce que**
le dispositif de réception (70 ; 170) présente une rainure de guidage (80) au moins pour l'une des chevilles de maintien (50 ; 150), en particulier une rainure de guidage (80) dont la coupe transversale s'élargit au moins partiellement en direction d'un fond de rainure.

15. Système de store selon la revendication 14,
**caractérisé en ce que**
- une première section de rainure (84) est conçue en tant que section d'introduction et s'étend de préférence dans la direction du sens de déroulement (4) et/ou
- une seconde section de rainure (86) est conçue en tant que section d'arrêt qui est fermée à son extrémité (86a) et s'étend de préférence perpendiculairement au sens de déroulement.

16. Système de store selon l'une des revendications précédentes,
**caractérisé en ce que**
le dispositif de support de couple (12f, 112f) est conçu en tant que téton de support de couple (12f ; 112f), qui s'étend de préférence parallèlement à l'une des chevilles de maintien (50 ; 150) et en particulier et de préférence jusque dans la rainure de guidage (80) lorsque le dispositif à store (10 ; 110) est inséré.

17. Système de store selon la revendication 16,
**caractérisé en ce que**
la longueur de la seconde section de rainure (86) correspond à la distance entre le téton de support de couple (12f, 112f) et la cheville de maintien (50 ; 150).
